# EUROPEAN PATENT SPECIFICATION

(11) **EP 4 467 954 B1**
(45) Date of publication and mention of the grant of the patent: **01.04.2026**
(21) Application number: 23175675.0
(22) Date of filing: 26.05.2023
(51) Int. Cl.: G01M 5/00, G05D 23/00

(54) **TEST ASSEMBLY FOR MECHANICAL LOAD TESTING FOR A WIND TURBINE ROTOR BLADE AND METHOD FOR OPERATING A TEST ASSEMBLY**
PRÜFANORDNUNG ZUR MECHANISCHEN BELASTUNGSPRÜFUNG EINES WINDENERGIEANLAGEN-ROTORBLATTES UND VERFAHREN ZUM BETREIBEN EINER PRÜFANORDNUNG
ENSEMBLE DE TEST POUR TEST DE CHARGE MÉCANIQUE D'UNE PALE DE ROTOR D'ÉOLIENNE ET PROCÉDÉ DE FONCTIONNEMENT D'UN ENSEMBLE DE TEST

(43) Date of publication of application: 27.11.2024
(73) Proprietor: Nordex Blade Technology Centre ApS, 5771 Stenstrup (DK)
(72) Inventor: Sørensen, Flemming, 5771 Stenstrup (DK); Hornemann, Jesper, 5771 Stenstrup (DK)
(74) Representative: Völkl Siebenson Patentanwälte - Partnerschaft mbB

(56) References cited:
- EP-A1- 3 722 772
- EP-B1- 3 516 362
- DE-B4- 102013 110 898
- US-A1- 2017 045 032

## Description

The invention refers to a test assembly for mechanical load testing for a wind turbine rotor blade. The invention also concerns a method for operating such test assembly.

Wind turbines having rotor blades are widely known from the prior art and are used to convert wind energy into electrical energy. In the region of a rotor blade root, the rotor blades typically comprise a rotor blade attachment region with a plurality of connecting elements integrated into the laminate. The connecting elements are typically metal bushings through which the rotor blades are connected via fastening (screw) bolts to a bearing ring of a so-called pitch bearing or to a component connected to the bearing ring such as e.g. an extender of the wind turbine. The metal bushings can be part of a flange insert for the rotor blade attachment. Such a structure is known, for example, from the international application WO 2015/124568 A1.

Alternatively, such metal bushings are also used for the connection of rotor blade segments which, when arranged and assembled lengthwise, form a rotor blade. The metal bushings are then located in the laminate of a respective division flange of the rotor blade segments. The rotor blade segments are connected to one another in that the metal bushings are coupled by means of bolts or by way of suitable intermediate pieces screwed to the metal bushings.

The above-described connections are subject to quite extensive stress, and therefore such assemblies must be thoroughly tested to make sure that the joints are able to handle the stress. All parts of the connections are usually tested mechanically for quasi-static and fatigue cases using specimens. The mechanical tests are conventionally performed by subjecting the specimen to axial loadings, while measuring response to increasing loads as well as repeated cyclic loads.

EP 3 722 772 A1 relates to a test bench for a wind turbine rotor blade. The test bench has a support to which a wind turbine rotor blade can be attached in such a way that it can vibrate. The test bench has an excitation device designed to excite the wind turbine rotor blade attached to the support into vibration and/or to assist vibration of the wind turbine rotor blade attached to the support. The excitation device has means for generating an air flow that exerts a force on a wind turbine rotor blade attached to the support.

It is an object of the present disclosure to provide a test assembly for mechanical load testing and a corresponding method, which contribute to facilitate more precise and sufficient load testing of test specimens.

The object is solved by the test assembly and the method according to the independent claims. Advantageous embodiments are given in the sub-claims.

According to a first aspect a test assembly for mechanical load testing for a wind turbine rotor blade is disclosed. The test assembly comprises a specimen, i.e. a test specimen. The specimen extends along a longitudinal axis and comprises a first specimen end and a second specimen end. The specimen comprises a first metal bushing and a second metal bushing, both the first and second metal bushing extending along the longitudinal axis. The specimen comprises a laminate surrounding the first and the second metal bushing. An outer end of the first metal bushing is associated with the first specimen end and an outer end of the second metal bushing is associated with the second specimen end. The test assembly comprises a cooling device, which is configured to cool the specimen by means of a cooling fluid.

The test assembly is configured to be operated for mechanical/structural tests as described above. For example, the test assembly is operated to apply a load to the specimen by applying tension forces on the first metal bushing and the second metal bushing, e.g. via screw bolts screwed into the first and second metal bushings. For example, the test assembly is used for fatigue testing.

The inventor has found that - during such tests - very high or increased temperatures are generated in the test specimens, especially in regions of the specimens that are subjected to particularly high mechanical loads. Such temperatures have negative impact on the structural performance of the test specimens. The test results could be incorrect, misleading and give an unrealistic picture. Furthermore, time for testing could be very high, e.g. in order to sort out wrong test results, destroyed test specimens and the like.

The described invention provides a cooling device to cool the test specimen. With the cooling device, the temperature of the test specimen can be reduced before a test run, for example to a predetermined temperature value. Alternatively or additionally, the test specimen can also be cooled during a test run, for example to prevent local heating and/or to keep a test specimen temperature value constant despite applied mechanical loads.

The invention provides several advantages, for example:
- A negative impact on time for testing and costs can be avoided or at least reduce.
- Test stops or pauses during test runs can be reduced or avoided. In particular, waiting time for cooling down overheated specimens to can be avoided before the test run can continue.
- Testing at higher test frequency is enabled. Thus, the efficiency of testing can be improved drastically with regard to test assembly/machine availability, time of testing and costs.
- Way better test results can be achieved. In particular, realistic or significantly more realistic test results can be obtained.
- Unrealistic high temperatures generated by high frequency testing can be prevented or reduced, which will improve the test results and thereby improve value for cost of testing.

The described test assembly allows for example to hold a certain temperature value, e.g. 40° C, for several thousand test runs, e.g. 30000 cycles.

The first specimen end and the second specimen end are opposite each other.

The surrounding laminate means that the metal bushings are at least partially wrapped into laminate. In other words, a free bushing end of each metal bushing can be freely accessible, meaning that these free ends can protrude out of the surrounding laminate at the first specimen end and the second specimen end.

Each metal bushing comprises an outer end and an opposite inner end. The inner ends of the metal bushings point to each other, for example. At their inner ends, each metal bushing comprises a bushing runout (short: runout). Thus, the runouts of the first metal bushing and the second metal bushing point to each other. A runout is a recess in the metal bushing extending in a longitudinal direction of the bushing towards the inner end, wherein an inner diameter of the recess increases along the longitudinal direction towards the outside, i.e. the inner end, wherein a wall thickness of the metal bushing decreases.

The cooling can be an inner cooling and/or an outer cooling. This means for example that the cooling device is configured on the one hand to cool the specimen from outside, e.g. by surrounding the specimen or providing cooling energy via an outer surface to the specimen. Thus, an outer cooling is provided. On the other hand, according to an inner cooling, the specimen can be cooled from inside. For example, with regard to the latter, cooling fluid can be provided into the specimen or that the metal bushings are directly cooled, e.g. at their outer ends, to bring cooling energy into the specimen. Furthermore, the cooling device can be configured and designed such that the inner and outer cooling are combined. Further, the cooling can be a direct or indirect cooling, which means that cooling fluid can be brought directly into contact with the specimen or the metal bushings or indirectly, e.g. by a heat exchanger.

The cooling device, preferably, is designed and configured to establish on or more cooling circuits. Depending on the cooling fluid, e.g. cooling air or cooling liquid, the cooling device may comprise respective components known to the person skilled in the art, e.g. cooling conducts or pipes, a compressor, pumps, ventilators or the like.

The test assembly may be seen as a single, separate unit, which is to be used in a test rig to be tested as described. For example, the test assembly is clamped in the test rig. The test rig for example comprises a support structure for mounting and fixation of the test assembly.

One or more temperature sensors can be provided to monitor the temperature values of the test specimen. This is also valuable in order control the cooling device.

According to an embodiment, the cooling device is configured to cool the specimen via an inner surface of the first metal bushing and the second metal bushing respectively. This is a solution for an inner cooling, which contributes to a very efficient transfer of cooling energy.

According to an embodiment, the specimen comprises a fluid inlet and a fluid outlet for connection to the cooling device to allow for the cooling fluid to pass through the specimen. Thus, a cooling circuit can be established. The cooling fluid is brought into the specimen to cool the specimen from inside. Thus, the metal bushings are effectively cooled as well as the surrounding laminate, e.g. by transferring cooling energy via the inner surfaces of the metal bushings.

According to an embodiment, the specimen comprises a cavity which is on the one hand fluidically coupled to the fluid inlet and on the other hand fluidically coupled to the fluid outlet. Preferably, the cavity is provided in a space between both the first and second metal bushings, e.g. in a space that is extended into respective runouts of the bushings. Thus, very effective cooling of the specimen and the metal bushings is enabled.

According to an embodiment, the specimen comprises a core element, wherein the core element extends along the longitudinal axis between the first and second metal bushing. The core element is arranged partially within the runout of the first metal bushing with a first end of the core element. The core element is arranged partially within the runout of the second metal bushing with a second end of the core element. The cavity is provided within the core element. Thus, a mounting friendly option is provided for the cooling device. The core element typically is made of a polymer foam material, such that bringing in a cavity is easy. Apart from that, core elements are used anyway when embedding metal bushings in a laminate of a rotor blade. Thus, a very realistic test scenario is provided.

According to an embodiment, a flow obstruction is arranged in the cavity for guiding the cooling fluid around the flow obstruction from the fluid inlet to the fluid outlet. This ensures that the cooling fluid passes through the specimen via a very long path, whereby the cooling fluid has contact over a large area with one or more inner contact surfaces of the core element resp. the metal bushings, so that a lot of cooling energy can be introduced into the specimen.

According to an embodiment, the cooling device comprises a first heat exchanger element being attached to the first specimen end and a second heat exchanger element being attached to the second specimen end in order to cool the first metal bushing and the second metal bushing respectively. This ensures a contact of the heat exchanger elements to the specimen at its ends in order to bring cooling energy into the specimen. Thus, the heat exchanger elements are actively cooled, wherein a thermal coupling is established to the specimen and/or the metal bushings.

Preferably, as described above, the outer ends of the metal bushing protrude slightly out of the laminate at the specimen ends. This contributes to a very good contact of the heat exchanger elements with the metal bushings.

According to an embodiment, the first heat exchanger element and/or the second heat exchanger element is a plate-shaped heat exchanger element. Preferably, the plate-shaped first heat exchanger element and/or the second heat exchanger element is made of a heat conducting material. A plate-shaped design ensures a large-area contact between the heat exchanger elements and the metal bushings, in particular if the outer ends of the metal bushing protrude slightly out of the laminate at the specimen ends.

According to an embodiment, the first heat exchanger element and/or the second heat exchanger element is screwed tightly against the first metal bushing and the second metal bushing respectively by means of a respective connection bolt, each connection bolt extending within the respective metal bushing and being configured to cool the specimen via an inner surface of the first metal bushing and the second metal bushing respectively. This further improves the contact between the heat exchanger elements and the metal bushings. Apart from that, the bolts pass through the heat exchanger elements and are inserted deeply into the bushings, e.g. screwed into the bushings. Thus, the bolts are in direct contact with the heat exchanger elements. In particular, if the bolts are made of heat conducting material like metal, the bolts serve to bring the cooling energy into the bushings and thus the specimen.

According to an embodiment, the first heat exchanger element and/or the second heat exchanger element is a metal body, which is in direct contact with the first metal bushing and the second metal bushing respectively. This contributes to a very good contact of the heat exchanger elements with the metal bushings, in particular, if as described above, the outer ends of the metal bushing protrude slightly out of the laminate at the specimen ends.

According to an embodiment, the first heat exchanger element and/or the second heat exchanger element each have a fluid inlet and a fluid outlet in order to allow the cooling fluid to pass through the first heat exchanger element and/or the second heat exchanger element. Thus, the heat exchanger elements can be efficiently provided with cooling fluid to transfer the cooling energy to and into the specimen.

According to an embodiment, the cooling device is configured to cool the specimen via an outer surface of the specimen. This contributes to the above-mentioned outer cooling solution, wherein the cooling device cools the specimen from outside.

According to an embodiment, the cooling device comprises a cooling body, which cooling body is arranged around the specimen. Thus, essentially the entire specimen can be cooled over the entire circumference. Preferably, the cooling body is in contact with the outer surface, e.g. essentially the entire outer surface, of the specimen. This ensures an effective and even cooling of the specimen.

According to an embodiment, the cooling body is formed by two cooling body halves which - in a form-fitted assembled state of the cooling body halves - enclose the specimen. This contributes to the above-mentioned functions and advantages, wherein additionally the mounting of the cooling device is improved.

According to an embodiment, the cooling body has a fluid inlet and a fluid outlet in order to allow the cooling fluid to pass through. Thus, a cooling circuit can be established. As a further embodiment, each halve can be separately fed by cooling fluid, meaning that there exist two cooling circuits.

According to an embodiment, cooling air or a liquid coolant is used as the cooling fluid.

According to a second aspect, a method for operating a test assembly according to any of the preceding claims for mechanical load testing of a specimen is disclosed. The specimen extends along a longitudinal axis and comprises a first specimen end and a second specimen end. The specimen comprises a first metal bushing and a second metal bushing, both the first and second metal bushing extending along the longitudinal axis. The specimen comprises a laminate surrounding the first and the second metal bushing. An outer end of the first metal bushing is associated with the first specimen end and an outer end of the second metal bushing is associated with the second specimen end. The method comprises the following steps:
- securing a first connection part of a test rig to the first specimen end by means of a screw connection with the first metal bushing,
- securing a second connection part of the test rig to the second specimen end by means of a screw connection with the second metal bushing,
- applying a load to the specimen by applying a tension force between the first connection part and the second connection part, wherein
- the specimen is cooled prior to and/or during the step of applying the load.

The method enables the above-mentioned functions and advantages. The above-described embodiments and the corresponding description of features analogously apply.

Further advantages, features and further developments are set out by the following exemplary embodiments which are explained in conjunction with the figures. The same or similar elements or elements acting in the same way are provided with the same reference numerals in the figures, wherein:
Fig. 1 shows a schematic representation of a wind turbine according to one embodiment example,
Fig. 2 shows a schematic representation of a wind turbine rotor blade,
Fig. 3 shows a schematic representation of a flange insert for the rotor blade,
Fig. 4 to 6 schematically show a specimen and test assembly according to an embodiment of the invention,
Fig. 7 and 8 schematically show a specimen for a test assembly according to a further embodiment of the invention,
Fig. 9 and 10 schematically show a test assembly according to a further embodiment of the invention,
Fig. 11 schematically shows a test assembly according to a further embodiment of the invention,
Fig. 12 shows a flow chart of a method for operating a test assembly according to an embodiment of the invention.

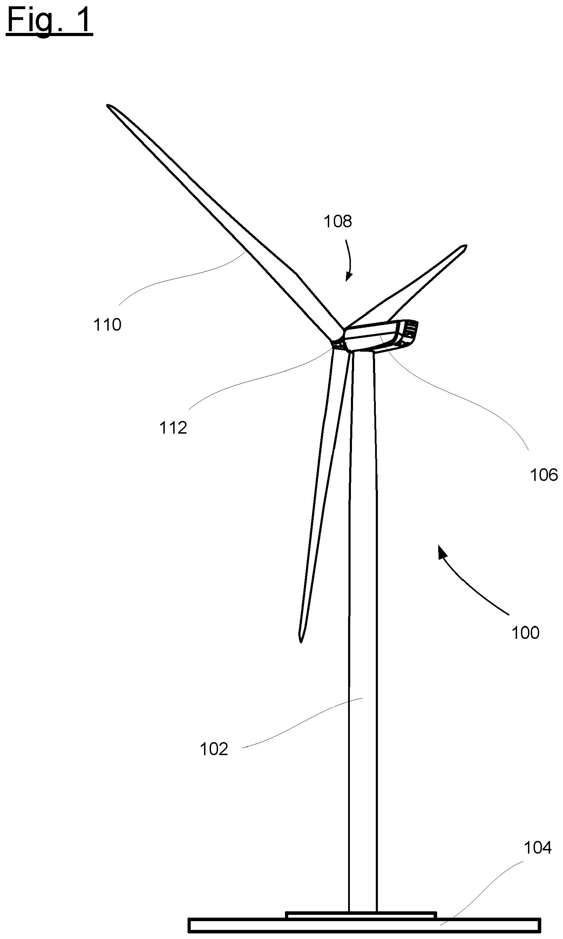

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

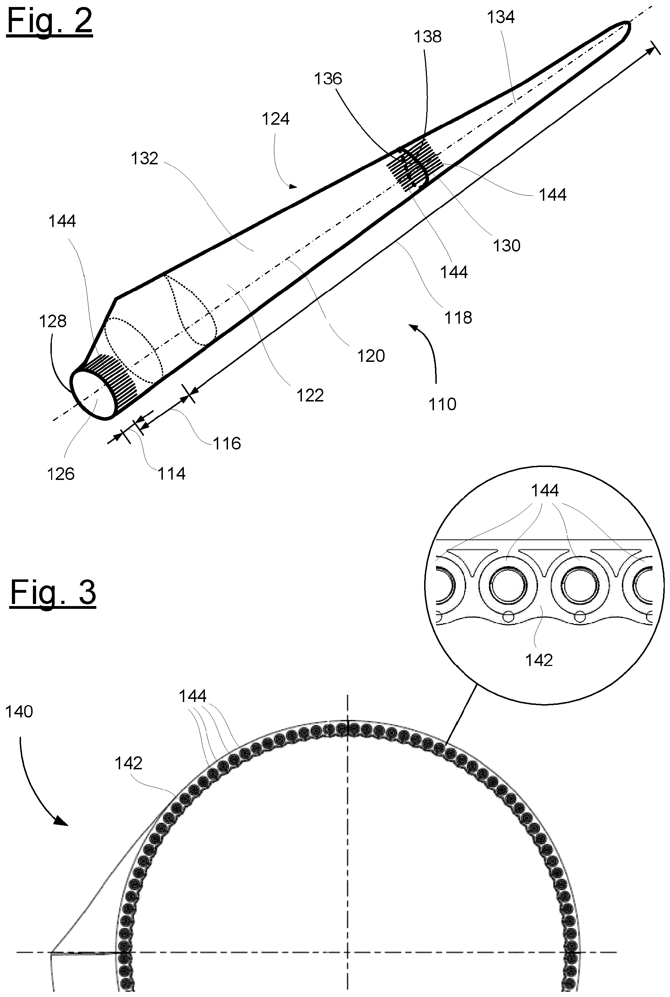

Figure 2 shows an exemplary wind turbine rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of rotor blade 110. The rotor blade 110 has a pressure side 122 and an opposite suction side 124 with respect to a longitudinal extension direction 120 (also main extension direction). The rotor blade 110 is essentially hollow inside.

In the rotor blade root area 114 a rotor blade connection end 126 with a flange connection 128 is provided, by means of which the rotor blade 110 is mechanically connected to a pitch bearing or an extender.

The rotor blade 110 comprises a division area 130 where a blade root-side rotor blade segment 132 and a blade tip-side rotor blade segment 134 are connected to each other. For this purpose, the segments 132, 134 each comprise a segment connection area 136, 138 (also connection ends). The rotor blade 110 is thus a split or segmented rotor blade.

Typically, a flange insert 140 is provided in order to manufacture the flange connection 128 at the rotor blade connection end 126. Said flange insert 140 comprises an arc-shaped laminate 142 (e.g. an inner laminate and an outer laminate), in which a multitude of connecting elements, i.e. metal bushings 144 and typically being threaded, are embedded, extending in the longitudinal extension direction 120. The metal bushings 144 are in particular steel bushings. A semicircular segment is shown in Fig. 3, also showing an enlarged detail cut-out.

In a typical manufacturing process, initially, the flange insert 140 is produced as a half-product or intermediate product, wherein the metal bushings 144 are arranged in a circle at fixed distances adjacent to one another. Distance spacing elements are optionally used to ensure the space between two adjacent metal bushings 144. The laminate 142 as well as the metal bushings 144 are subsequently sealed in an air-tight manner and infused with a matrix material, for instance epoxy resin. In a later step, the flange insert 140 is inserted, for example, into a main mold in order to produce the final rotor blade 110, i.e. the rotor blade (half-)shell and connected to further laminate layers.

However, it is also conceivable that no flange insert 140 is provided and the metal bushings 144 are embedded directly in the laminate of the rotor blade 110, for instance in rotor blade half-shells.

Analogously, the two rotor blade segments 132 and 134 are connected by way of such metal bushings 144 with or without flange inserts.

As mentioned in the introductory part of this writing, the described mechanical connections with the metal bushings 144 are subjected to various tests, in particular mechanical tests, which is referred to in the following.

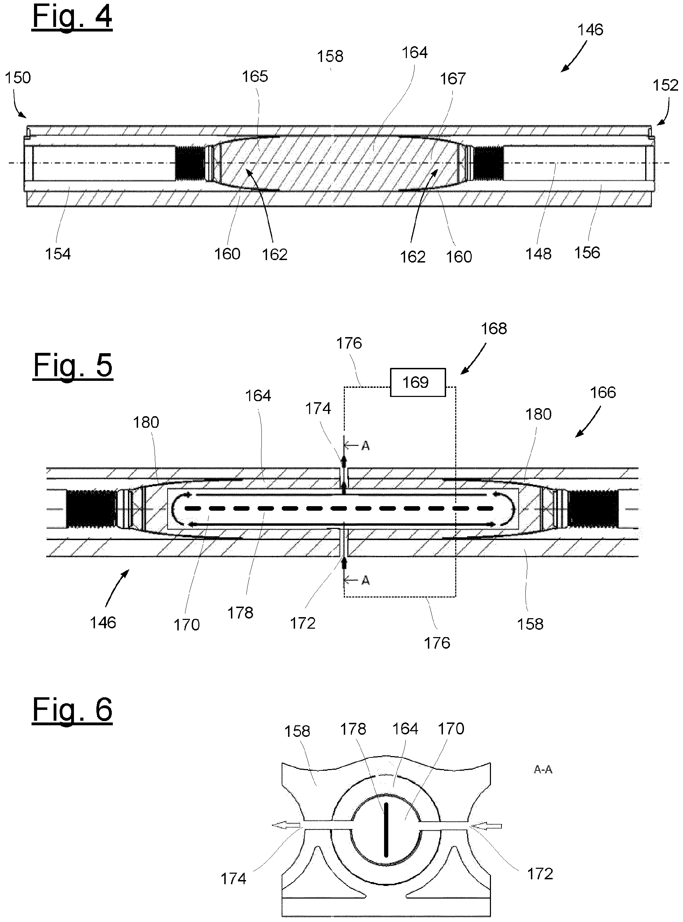

Fig. 4 shows a schematic cross section of a specimen 146. The specimen 146 extends along a longitudinal axis 148, which can also be referred to as middle axis. The specimen 146 has a first specimen end 150 and an opposite second specimen end 152. The specimen 146 comprises a first metal bushing 154 and a second metal bushing 156, which extend along and are arranged along the longitudinal axis 148. A laminate 158, e.g. several laminate layers being resin infused and cured, surround both metal bushings 154 and 156. The bushings 154, 156 have a cylindrical outer contour. Inside the specimen 146, the metal bushings 154, 156 each comprise a bushing run-out 160. Each bushing run-out 160 has a recess 162. Between the two bushings 154, 156 a core element 164 is arranged. The core element 164 is made of foam material, for example, and is at least partially inserted into the recesses 162 of both metal bushings 154, 156 with a first core element end 165 and second core element end 167.

The specimen 146 is used to be (mechanically) tested in a test assembly, as schematically indicated in Fig. 5. As mentioned, during tests or prior to testing, the specimen 146 shall be cooled, e.g. constantly or at certain times. We note that in this writing it is focused on the cooling of the specimen. Thus, details of the test assembly are omitted for sake of clarity.

Fig. 5 schematically shows a test assembly 166 with the specimen 146. The test assembly 166 comprises a cooling device 168. The cooling device 168 can be of any kind, e.g. a heat pump, air conditioner or the like. The cooling device 168 generally comprises a cooling source 169, generating the cooling energy and one or more pipe lines 176.

In order to be cooled, the specimen 146 has a cavity 170, which is formed withing the core element 164. The specimen 146 has a fluid inlet 172 and a fluid outlet 174, which both are fluidically coupled to the cavity 170. In the shown example, the fluid inlet 172 and the fluid outlet 174 are arranged opposite to each other and extend in radial direction with respect to the longitudinal axis 148. Both the fluid inlet 172 and the fluid outlet 174 are fluidically coupled via the pipe lines 176 to the cooling source 169 to form a cooling circuit.

Fig. 6 shows a cross-sectional view A-A of Fig 5, detailing the above-said.

In order to cool the specimen 146, the cooling device 168 is configured to provide cooling fluid, e.g. cooling air or cooling liquid, to the specimen 146. In this regard, the cooling fluid is passed through the pipe lines 176 via the fluid inlet 172 into the cavity 170 and leaves the latter via the fluid outlet 174. Within the cavity 170, an optional flow obstruction 178 (indicated by dotted line) is arranged, in order to ensure that the cooling fluid has to take a long path within the cavity 170 until it leaves it again via the fluid outlet 174. The shown arrows indicate a possible flow of the cooling fluid within the specimen 146. The cooling fluid transfers cooling energy to the core element 162 and into the surrounding laminate 158, e.g. via inner surfaces 180 of the metal bushings 154, 156.

The above described test assembly 166 enables the mentioned functions and advantages when it comes to mechanical testing of the specimen 146.

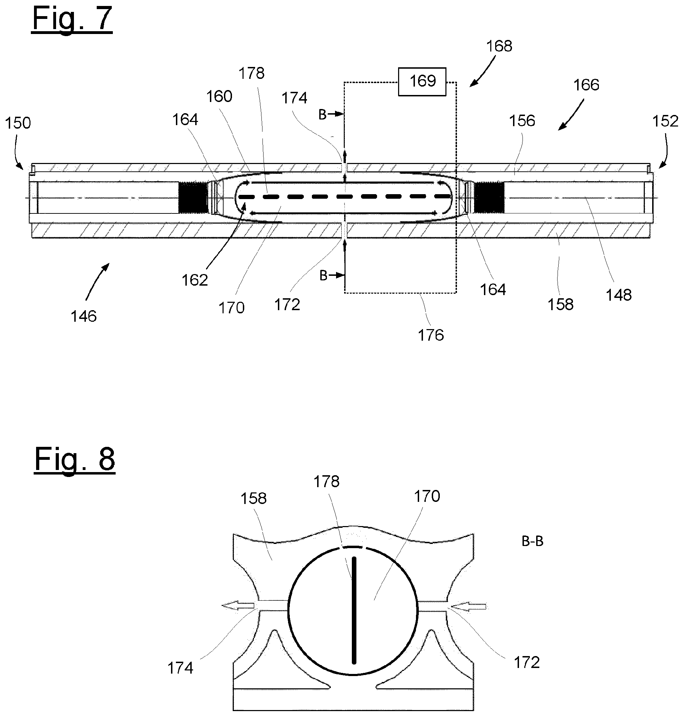

Figures 7 and 8 refer to an embodiment of a test assembly 166, which is very similar to the above described one. Thus, the above description of the features and the reference signs similarly apply, unless otherwise stated below. Similar with Fig. 6 as described above, Fig. 8 shows a cross-sectional view B-B of Fig 7.

In difference to the embodiment according to figures 4 to 6, there is no or only little core element 164. Thus, nearly the entire space between the first metal bushing 154 and the second metal bushing 156 is formed by the cavity 170. Thus, an even more effective cooling of the specimen 146 is achieved.

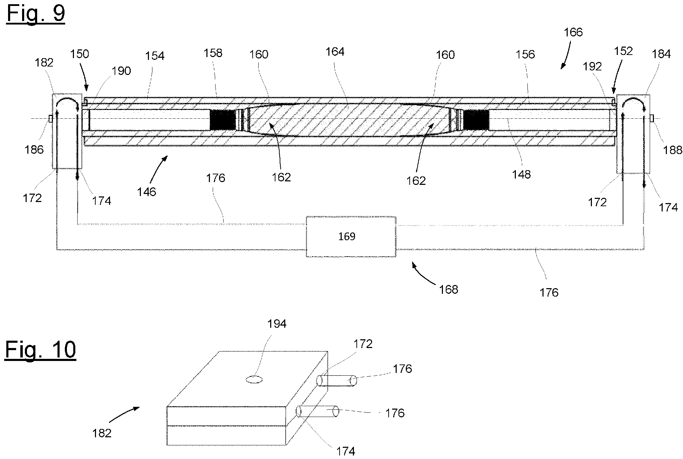

Figures 9 and 10 refer to another embodiment of the invention. Again, the above description of the features and the reference signs similarly apply, unless otherwise stated below.

The shown specimen 146 is similar to the above described specimens. In difference to the above-described embodiments, however, the core element 164 does not comprise a cavity as above. Further, no fluid inlet and outlet is provided in the specimen 146.

Rather, a first heat exchanger element 182 and a second heat exchanger element 184 is provided. Both heat exchanger elements 182, 184 comprise metal, plate-shaped bodies. The first heat exchanger element 182 is attached to the first specimen end 150. Thereby, the first heat exchanger element 182 is screwed against the first metal bushing 152 via a first bolt 186, which bolt 186 is screwed into the metal bushing 152 and thus extends at least partially within the first metal bushing 152. Analogously, the second heat exchanger element 184 is screwed against the second metal bushing 152 via a second bolt 188. Since each metal bushing 154, 156 slightly protrudes out of the laminate 158 at the specimen ends 150, 152, the heat exchanger elements 182, 184 can tightly be screwed against the metal bushings 154, 156. In other words, outer ends 190, 192 of the metal bushings 154, 156 slightly extend over the laminate 158 along the longitudinal direction 148.

Each heat exchanger element 182, 184 has a fluid inlet 172 and a fluid outlet 174, being connected via pipe lines 176 to the cooling device 168.

Fig. 10 shows the first heat exchanger element 182 in detail, which comprises a bore hole 194 for the first bolt 186 to be passed through. The second heat exchanger element 184 is formed analogously, although a different design may be used, maintaining the above-described functionality.

Thus, an effective cooling of the specimen 146 and its metal bushings 154, 156 can be achieved, as already described.

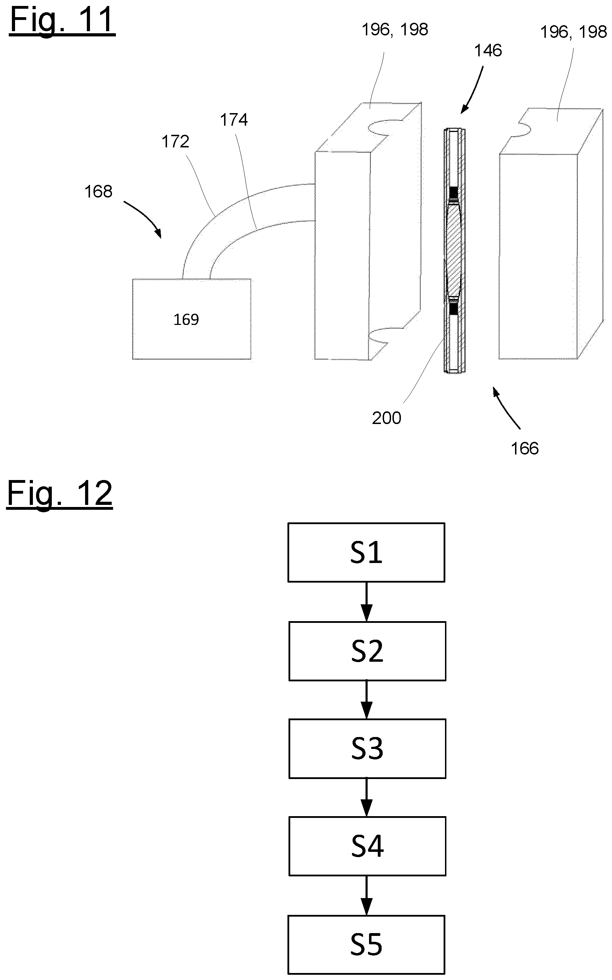

Fig. 11 refers to another embodiment of the invention, which differs with regard to the cooling of the specimen 146. In particular, the shown embodiment features an outer cooling of the specimen 146. Again, the above description and reference signs similarly apply, unless otherwise stated. In particular the specimen 146 according to fig. 11 resembles the specimen according to figure 9.

The cooling device 168 comprises an air conditioner as a cooling source 169. Further, the cooling device 168 comprises a cooling body 196 being formed by two cooling body halves 198, which - in a form-fitted assembled state of the cooling body halves - enclose the specimen 146 more or less entirely. The cooling body 196, i.e. its halves 198, are in direct contact with an outer surface 200 of the specimen 146. Thus, by providing cooling energy to the cooling body 196, the specimen 146 is cooled via the outer surface 200.

The cooling body halves 198 of the cooling body are connected to each other in an assembled state. The cooling body 196 has a fluid inlet 172 and a fluid outlet 174, similar to the inlet and outlet 172, 174 as described above. In the form-fitted state of the cooling body halves 198, the cooling fluid can pass to the outer cooling body halve via suitable channels and or piping within the cooling body halves 198. Other designs are possible as well, as long the cooling body 196 is configured to cool the specimen 146.

At this point, we note that the above description of embodiments is not limited to the exact shown design. For example, the metal bushings 154, 156 can have different designs. It is essential that a test specimen 146 is cooled as described above in order to achieve the advantages and functions mentioned at the beginning.

Fig. 12 shows a schematic flowchart of a method for operating a test assembly 166, as described above.

In a first step S1, a specimen 146 as described above is provided.

In a second step S2, a first connection part of a test rig (not shown in any of the figures) is connected to the first specimen end 150 by means of a screw connection with the first metal bushing 154.

In a third step S3, a second connection part of the test rig (not shown in any of the figures) is connected to the second specimen end 152 by means of a screw connection with the second metal bushing 156.

The above connection parts are mechanical parts/components of the test rig, which are configured to bring a force/tension onto the specimen 146.

In a fourth step S4, the specimen 146 is cooled via the cooling device 168 to a predetermined temperature.

In a fifth step S5, a load is applied to the specimen 146 by applying a tension force between the first connection part and the second connection part, wherein the specimen 146 is constantly cooled by the cooling device 168.

### Reference signs

- 100: wind turbine
- 102: tower
- 104: foundation
- 106: nacelle
- 108: rotor
- 110: rotor blade
- 112: rotor hub
- 114: rotor blade root area
- 116: transition area
- 118: profile area
- 120: longitudinal direction
- 122: pressure side
- 124: suction side
- 126: rotor blade connection end
- 128: flange connection
- 130: division area
- 132: first rotor blade segment
- 134: second rotor blade segment
- 136: first connection end
- 138: second connection end
- 140: flange insert
- 142: laminate
- 144: metal bushing
- 146: specimen
- 148: longitudinal axis
- 150: first specimen end
- 152: second specimen end
- 154: first metal bushing
- 156: second metal bushing
- 158: laminate
- 160: run-out
- 162: recess
- 164: core element
- 165: first core element end
- 166: test assembly
- 167: second core element end
- 168: cooling device
- 169: cooling source
- 170: cavity
- 172: fluid inlet
- 174: fluid outlet
- 176: pipe line
- 178: flow obstruction
- 180: inner surface
- 182: first heat exchanger element
- 184: second heat exchanger element
- 186: first bolt
- 188: second bolt
- 190: first outer end
- 192: second outer end
- 194: bore hole
- 196: cooling body
- 198: cooling body halve
- 200: outer surface
- A-A: cross section
- B-B: cross section
- S1 to S...: step

## Claims

1. Test assembly (166) for mechanical load testing for a wind turbine rotor blade (110), comprising
- a specimen (146), wherein
-- the specimen (146) extends along a longitudinal axis (148) and comprises a first specimen end (150) and a second specimen end (152),
-- the specimen (146) comprises a first metal bushing (154) and a second metal bushing (156), both the first and second metal bushing (154, 156) extending along the longitudinal axis (148),
-- the specimen (146) comprises a laminate (158) surrounding the first and the second metal bushing (154, 156),
-- an outer end (190) of the first metal bushing (154) is associated with the first specimen end (150) and an outer end (192) of the second metal bushing (156) is associated with the second specimen end (152), and
- a cooling device (168), which is configured to cool the specimen (146) by means of a cooling fluid.

2. Test assembly (166) according to claim 1, wherein the cooling device (168) is configured to cool the specimen (146) via an inner surface (180) of the first metal bushing (154) and the second metal bushing (156) respectively.

3. Test assembly (166) according to claim 1 or 2, wherein the specimen (146) comprises a fluid inlet (172) and a fluid outlet (174) for connection to the cooling device (168) to allow for the cooling fluid to pass through the specimen (146).

4. Test assembly (166) according to claim 3, wherein the specimen (146) comprises a cavity (170) which is on the one hand fluidically coupled to the fluid inlet (172) and on the other hand fluidically coupled to the fluid outlet (174).

5. Test assembly (166) according to claim 4, wherein
- the specimen (146) comprises a core element (164),
- the core element (164) extends along the longitudinal axis (148) between the first and second metal bushing (154, 156),
- the core element (164) is arranged partially within the first metal bushing (154) with a first end (165) of the core element (164),
- the core element (164) is arranged partially within the second metal bushing with a second end (167) of the core element (164),
- the cavity (170) is provided within a core element (164).

6. Test assembly (166) according to claim 4 or 5, wherein a flow obstruction (178) is arranged in the cavity (170) for guiding the cooling fluid around the flow obstruction (178) from the fluid inlet (172) to the fluid outlet (174).

7. Test assembly (166) according to anyone of the preceding claims, wherein the cooling device (168) comprises a first heat exchanger element (182) being attached to the first specimen end (150) and a second heat exchanger element (184) being attached to the second specimen end (152) in order to cool the first metal bushing (154) and the second metal bushing (156) respectively.

8. Test assembly (166) according claim 7, wherein the first heat exchanger element (182) and/or the second heat exchanger element (184) is screwed tightly against the first metal bushing (154) and the second metal bushing (156) respectively by means of a respective connection bolt (186, 188), each connection bolt (186, 188) extending within the respective metal bushing (154, 156) and being configured to cool the specimen (146) via an inner surface (180) of the first metal bushing (154) and the second metal bushing (156) respectively.

9. Test assembly (166) according to claim 7 or 8, wherein the first heat exchanger element (182) and/or the second heat exchanger element (184) is a plate-shaped heat exchanger element.

10. Test assembly (166) according to anyone of claims 7 to 9, wherein the first heat exchanger element (182) and/or the second heat exchanger element (184) is a metal body, which is in direct contact with the first metal bushing (154) and the second metal bushing (156) respectively.

11. Test assembly (166) according to anyone of claims 7 to 10, wherein the first heat exchanger element (182) and/or the second heat exchanger element (184) each have a fluid inlet (172) and a fluid outlet (174) in order to allow the cooling fluid to pass through the first heat exchanger element (182) and/or the second heat exchanger element (184).

12. Test assembly (166) according to claim 1, wherein the cooling device (168) is configured to cool the specimen (146) via an outer surface of the specimen (146).

13. Test assembly (166) according to claim 12, wherein the cooling device (168) comprises a cooling body (196), which cooling body (196) is arranged around the specimen (146).

14. Test assembly (166) according to claim 13, wherein the cooling body (196) is formed by two cooling body halves (198) which - in a form-fitted assembled state of the cooling body halves (198) - enclose the specimen (146).

15. Test assembly (166) according to claim 13 or 14, wherein the cooling body (196) has a fluid inlet (172) and a fluid outlet (174) in order to allow the cooling fluid to pass through.

16. Test assembly (166) according to anyone of the preceding claims, wherein cooling air or a liquid coolant is used as the cooling fluid.

17. Method for operating a test assembly (166) according to any of the preceding claims for mechanical load testing of the specimen (146), wherein
- the specimen (146) extends along the longitudinal axis (148) and comprises the first specimen end (150) and the second specimen end (152),
- the specimen (146) comprises the first metal bushing (154) and the second metal bushing (156), both the first and second metal bushing (154, 156) extending along the longitudinal axis (148),
- the specimen (146) comprises the laminate (158) surrounding the first and the second metal bushing (154, 156), and
- the outer end (190) of the first metal bushing (154) is associated with the first specimen end (150) and the outer end (192) of the second metal bushing (156) is associated with the second specimen end (152),
the method comprising the following steps:
- securing a first connection part of a test rig to the first specimen end (150) by means of a screw connection with the first metal bushing (154),
- securing a second connection part of the test rig to the second specimen end (152) by means of a screw connection with the second metal bushing (156),
- applying a load to the specimen (146) by applying a tension force between the first connection part and the second connection part, wherein
- the specimen (146) is cooled prior to and/or during the step of applying the load.

## Patentansprüche

1. Testvorrichtung (166) zur mechanischen Belastungsprüfung für Windturbinenrotorblatt (110), umfassend
- einen Prüfkörper (146), wobei
-- sich der Prüfkörper (146) entlang einer Längsachse (148) erstreckt und ein erstes Prüfkörperende (150) und ein zweites Prüfkörperende (152) umfasst,
-- der Prüfkörper (146) eine erste Metallhülse (154) und eine zweite Metallhülse (156) umfasst, wobei sich sowohl die erste als auch die zweite Metallhülse (154, 156) entlang der Längsachse (148) erstrecken,
-- der Prüfkörper (146) ein Laminat (158) umfasst, das die erste und die zweite Metallhülse (154, 156) umgibt,
-- ein äußeres Ende (190) der ersten Metallhülse (154) ist mit dem ersten Prüfkörperende (150) verbunden und ein äußeres Ende (192) der zweiten Metallhülse (156) ist mit dem zweiten Prüfkörperende (152) verbunden, und
- eine Kühlvorrichtung (168), die so konfiguriert ist, dass sie den Prüfkörper (146) mittels eines Kühlfluids kühlt.

2. Testvorrichtung (166) nach Anspruch 1, wobei die Kühlvorrichtung (168) so konfiguriert ist, dass sie den Prüfkörper (146) über eine Innenfläche (180) der ersten Metallhülse (154) bzw. der zweiten Metallhülse (156) kühlt.

3. Testvorrichtung (166) nach Anspruch 1 oder 2, wobei der Prüfkörper (146) einen Fluideinlass (172) und einen Fluidauslass (174) zum Anschluss an die Kühlvorrichtung (168) umfasst, damit das Kühlfluid durch den Prüfkörper (146) strömen kann.

4. Testvorrichtung (166) nach Anspruch 3, wobei der Prüfkörper (146) einen Hohlraum (170) umfasst, der einerseits fluidisch mit dem Fluideinlass (172) und andererseits fluidisch mit dem Fluidauslass (174) verbunden ist.

5. Testvorrichtung (166) gemäß Anspruch 4, wobei
- der Prüfkörper (146) ein Kernelement (164) umfasst,
- sich das Kernelement (164) entlang der Längsachse (148) zwischen der ersten und der zweiten Metallhülse (154, 156) erstreckt,
- das Kernelement (164) teilweise innerhalb der ersten Metallhülse (154) mit einem ersten Ende (165) des Kernelements (164) angeordnet ist,
- das Kernelement (164) teilweise innerhalb der zweiten Metallhülse mit einem zweiten Ende (167) des Kernelements (164) angeordnet ist,
- der Hohlraum (170) innerhalb eines Kernelements (164) vorgesehen ist.

6. Testvorrichtung (166) nach Anspruch 4 oder 5, wobei in dem Hohlraum (170) ein Strömungshindernis (178) angeordnet ist, um das Kühlfluid vom Fluideinlass (172) zum Fluidauslass (174) um das Strömungshindernis (178) herum zu leiten.

7. Testvorrichtung (166) nach einem der vorstehenden Ansprüche, wobei die Kühlvorrichtung (168) ein erstes Wärmetauscherelement (182), das am ersten Prüfkörperende (150) angebracht ist, und ein zweites Wärmetauscherelement (184) umfasst, das am zweiten Prüfkörperende (152) angebracht ist, um die erste Metallhülse (154) bzw. die zweite Metallhülse (156) zu kühlen.

8. Testvorrichtung (166) gemäß Anspruch 7, wobei das erste Wärmetauscherelement (182) und/oder das zweite Wärmetauscherelement (184) mittels eines jeweiligen Verbindungsbolzen (186, 188) fest gegen die erste Metallhülse (154) bzw. die zweite Metallhülse (156) geschraubt ist, wobei sich jeder Verbindungsbolzen (186, 188) innerhalb der jeweiligen Metallhülse (154, 156) erstreckt und so konfiguriert ist, dass er den Prüfkörper (146) über eine Innenfläche (180) der ersten Metallhülse (154) bzw. der zweiten Metallhülse (156) kühlt.

9. Testvorrichtung (166) nach Anspruch 7 oder 8, wobei das erste Wärmetauscherelement (182) und/oder das zweite Wärmetauscherelement (184) ein plattenförmiges Wärmetauscherelement ist.

10. Testvorrichtung (166) nach einem der Ansprüche 7 bis 9, wobei das erste Wärmetauscherelement (182) und/oder das zweite Wärmetauscherelement (184) ein Metallkörper ist, der in direktem Kontakt mit der ersten Metallhülse (154) bzw. der zweiten Metallhülse (156) steht.

11. Testvorrichtung (166) nach einem der Ansprüche 7 bis 10, wobei das erste Wärmetauscherelement (182) und/oder das zweite Wärmetauscherelement (184) jeweils einen Fluideinlass (172) und einen Fluidauslass (174) aufweist, um das Kühlfluid durch das erste Wärmetauscherelement (182) und/oder das zweite Wärmetauscherelement (184) strömen zu lassen.

12. Testvorrichtung (166) gemäß Anspruch 1, wobei die Kühlvorrichtung (168) so konfiguriert ist, dass sie den Prüfkörper (146) über eine Außenfläche des Prüfkörpers (146) kühlt.

13. Testvorrichtung (166) nach Anspruch 12, wobei die Kühlvorrichtung (168) einen Kühlkörper (196) umfasst, der um den Prüfkörper (146) herum angeordnet ist.

14. Testvorrichtung (166) nach Anspruch 13, wobei der Kühlkörper (196) aus zwei Kühlkörperhälften (198) gebildet ist, die - in einem formschlüssig zusammengefügten Zustand der Kühlkörperhälften (198) - den Prüfkörper (146) umschließen.

15. Testvorrichtung (166) nach Anspruch 13 oder 14, wobei der Kühlkörper (196) einen Fluideinlass (172) und einen Fluidauslass (174) aufweist, um den Durchfluss des Kühlfluids zu ermöglichen.

16. Testvorrichtung (166) nach einem der vorstehenden Ansprüche, wobei als Kühlfluid Kühlluft oder ein flüssiges Kühlmittel verwendet wird.

17. Verfahren zum Betreiben einer Testvorrichtung (166) gemäß einem der vorstehenden Ansprüche zur mechanischen Belastungsprüfung des Prüfkörpers (146), wobei
- sich der Prüfkörper (146) entlang der Längsachse (148) erstreckt und das erste Prüfkörperende (150) und das zweite Prüfkörperende (152) umfasst,
- der Prüfkörper (146) eine erste Metallhülse (154) und eine zweite Metallhülse (156) umfasst, wobei sich sowohl die erste als auch die zweite Metallhülse (154, 156) entlang der Längsachse (148) erstrecken,
- der Prüfkörper (146) das Laminat (158) umfasst, das die erste und die zweite Metallhülse (154, 156) umgibt, und
- das äußere Ende (190) der ersten Metallhülse (154) ist mit dem ersten Prüfkörperende (150) verbunden und das äußere Ende (192) der zweiten Metallhülse (156) ist mit dem zweiten Prüfkörperende (152) verbunden,
wobei das Verfahren die folgenden Schritte umfasst:
- Befestigen eines ersten Verbindungsteils einer Prüfvorrichtung an dem ersten Prüfkörperende (150) mittels einer Schraubverbindung mit der ersten Metallhülse (154),
- Befestigen eines zweiten Verbindungsteils der Prüfvorrichtung an dem zweiten Prüfkörperende (152) mittels einer Schraubverbindung mit der zweiten Metallhülse (156),
- Aufbringen einer Last auf den Prüfkörper (146) durch Aufbringen einer Zugkraft zwischen dem ersten Verbindungsteil und dem zweiten Verbindungsteil, wobei
- der Prüfkörper (146) vor und/oder während des Schritts des Aufbringens der Last gekühlt wird.

## Revendications

1. Ensemble d'essai (166) pour l'essai de charge mécanique d'une pale de rotor d'éolienne (110), comprenant
- un échantillon (146), dans lequel
-- l'échantillon (146) s'étend le long d'un axe longitudinal (148) et comprend une première extrémité d'échantillon (150) et une deuxième extrémité d'échantillon (152),
-- l'échantillon (146) comprend une première douille métallique (154) et une deuxième douille métallique (156), les première et deuxième douilles métalliques (154, 156) s'étendant toutes deux le long de l'axe longitudinal (148),
-- l'échantillon (146) comprend un stratifié (158) entourant la première et la deuxième douilles métalliques (154, 156),
-- une extrémité extérieure (190) de la première douille métallique (154) est associée à la première extrémité d'échantillon (150) et une extrémité extérieure (192) de la deuxième douille métallique (156) est associée à la deuxième extrémité d'échantillon (152), et
- un dispositif de refroidissement (168), qui est configuré pour refroidir l'échantillon (146) au moyen d'un fluide de refroidissement.

2. Ensemble d'essai (166) selon la revendication 1, dans lequel le dispositif de refroidissement (168) est configuré pour refroidir l'échantillon (146) via une surface intérieure (180) de la première douille métallique (154) et de la deuxième douille métallique (156) respectivement.

3. Ensemble d'essai (166) selon la revendication 1 ou 2, dans lequel l'échantillon (146) comprend une entrée de fluide (172) et une sortie de fluide (174) pour la connexion au dispositif de refroidissement (168) afin de permettre au fluide de refroidissement de passer à travers l'échantillon (146).

4. Ensemble d'essai (166) selon la revendication 3, dans lequel l'échantillon (146) comprend une cavité (170) qui est d'une part couplée de manière fluidique à l'entrée de fluide (172) et d'autre part couplée de manière fluidique à la sortie de fluide (174).

5. Ensemble d'essai (166) selon la revendication 4, dans lequel
- l'échantillon (146) comprend un élément central (164),
- l'élément central (164) s'étend le long de l'axe longitudinal (148) entre la première et la deuxième douille métallique (154, 156),
- l'élément central (164) est disposé partiellement à l'intérieur de la première douille métallique (154) avec une première extrémité (165) de l'élément central (164),
- l'élément central (164) est disposé partiellement à l'intérieur de la deuxième douille métallique avec une deuxième extrémité (167) de l'élément central (164),
- la cavité (170) est prévue à l'intérieur de l'élément central (164).

6. Ensemble d'essai (166) selon la revendication 4 ou 5, dans lequel un obstacle à l'écoulement (178) est disposé dans la cavité (170) pour guider le fluide de refroidissement autour de l'obstacle à l'écoulement (178) depuis l'entrée de fluide (172) vers la sortie de fluide (174).

7. Ensemble d'essai (166) selon l'une quelconque des revendications précédentes, dans lequel le dispositif de refroidissement (168) comprend un premier élément d'échangeur de chaleur (182) fixé à la première extrémité d'échantillon (150) et un deuxième élément d'échangeur de chaleur (184) fixé à la deuxième extrémité d'échantillon (152) afin de refroidir la première douille métallique (154) et la deuxième douille métallique (156) respectivement.

8. Ensemble d'essai (166) selon la revendication 7, dans lequel le premier élément d'échangeur de chaleur (182) et/ou le deuxième élément d'échangeur de chaleur (184) est vissé fermement contre la première douille métallique (154) et la deuxième douille métallique (156) respectivement au moyen d'un boulon de connexion respectif (186, 188), chaque boulon de connexion (186, 188) s'étendant à l'intérieur de la douille métallique respective (154, 156) et étant configuré pour refroidir l'échantillon (146) via une surface intérieure (180) de la première douille métallique (154) et de la deuxième douille métallique (156) respectivement.

9. Ensemble d'essai (166) selon la revendication 7 ou 8, dans lequel le premier élément d'échangeur de chaleur (182) et/ou le deuxième élément d'échangeur de chaleur (184) est un élément d'échangeur de chaleur en forme de plaque.

10. Ensemble d'essai (166) selon l'une quelconque des revendications 7 à 9, dans lequel le premier élément d'échangeur de chaleur (182) et/ou le deuxième élément d'échangeur de chaleur (184) est un corps métallique qui est en contact direct avec la première douille métallique (154) et la deuxième douille métallique (156) respectivement.

11. Ensemble d'essai (166) selon l'une quelconque des revendications 7 à 10, dans lequel le premier élément d'échangeur de chaleur (182) et/ou le deuxième élément d'échangeur de chaleur (184) comportent chacun une entrée de fluide (172) et une sortie de fluide (174) afin de permettre au fluide de refroidissement de passer à travers le premier élément d'échangeur de chaleur (182) et/ou le deuxième élément d'échangeur de chaleur (184).

12. Ensemble d'essai (166) selon la revendication 1, dans lequel le dispositif de refroidissement (168) est configuré pour refroidir l'échantillon (146) via une surface extérieure de l'échantillon (146).

13. Ensemble d'essai (166) selon la revendication 12, dans lequel le dispositif de refroidissement (168) comprend un corps de refroidissement (196), lequel corps de refroidissement (196) est disposé autour de l'échantillon (146).

14. Ensemble d'essai (166) selon la revendication 13, dans lequel le corps de refroidissement (196) est formé par deux moitiés de corps de refroidissement (198) qui, dans un état assemblé par complémentarité de forme des moitiés de corps de refroidissement (198), entourent l'échantillon (146).

15. Ensemble d'essai (166) selon la revendication 13 ou 14, dans lequel le corps de refroidissement (196) comporte une entrée de fluide (172) et une sortie de fluide (174) afin de permettre le passage du fluide de refroidissement.

16. Ensemble d'essai (166) selon l'une quelconque des revendications précédentes, dans lequel de l'air de refroidissement ou un liquide de refroidissement est utilisé comme fluide de refroidissement.

17. Procédé pour faire fonctionner un ensemble d'essai (166) selon l'une quelconque des revendications précédentes pour l'essai de charge mécanique de l'échantillon (146), dans lequel
- l'échantillon (146) s'étend le long de l'axe longitudinal (148) et comprend la première extrémité d'échantillon (150) et la deuxième extrémité d'échantillon (152),
- l'échantillon (146) comprend une première douille métallique (154) et une deuxième douille métallique (156), les première et deuxième douilles métalliques (154, 156) s'étendant toutes deux le long de l'axe longitudinal (148),
- l'échantillon (146) comprend le stratifié (158) entourant la première et la deuxième douilles métalliques (154, 156), et
- l'extrémité extérieure (190) de la première douille métallique (154) est associée à la première extrémité d'échantillon (150) et l'extrémité extérieure (192) de la deuxième douille métallique (156) est associée à la deuxième extrémité d'échantillon (152),
le procédé comprenant les étapes suivantes :
- fixer une première partie de connexion d'un banc d'essai à la première extrémité d'échantillon (150) au moyen d'une connexion vissée avec la première douille métallique (154),
- fixer une deuxième partie de connexion du banc d'essai à la deuxième extrémité d'échantillon (152) au moyen d'une connexion vissée avec la deuxième douille métallique (156),
- appliquer une charge à l'échantillon (146) en appliquant une force de tension entre la première partie de connexion et la deuxième partie de connexion, dans lequel
- l'échantillon (146) est refroidi avant et/ou pendant l'étape d'application de la charge.
